Europäisches Patentamt

European Patent Office

Office européen des brevets

(19)

(11) Veröffentlichungsnummer: **0 070 264**
**A2**

# (12) EUROPÄISCHE PATENTANMELDUNG

(21) Anmeldenummer: **82830202.6**

(22) Anmeldetag: **08.07.82**

(51) Int. Cl.³: **B 07 B 13/00**
**B 07 B 9/00**

(30) Priorität: **15.07.81 IT 4890481**

(43) Veröffentlichungstag der Anmeldung:
**19.01.83 Patentblatt 83/3**

(84) Benannte Vertragsstaaten:
**AT BE CH DE FR GB LI LU NL SE**

(71) Anmelder: **TECNICOMPLEX SPA**
**Via Bruxelles, 51/53**
**I-00198 Rome(IT)**

(72) Erfinder: **Cerroni, Manlio**
**Via Bruxelles, 51**
**Rom(IT)**

(74) Vertreter: **Sneider, Massimo**
**Lenzi & C. Via del Tritone 201**
**I-00187 Roma(IT)**

(54) Verfahren zum Trennen von Materialien unterschiedlichen spezifischen Gewichts und Vorrichtung für die Verwirklichung dieses Verfahrens, besonders geeignet um die im aus festem Stadtmüll gewonnenen Kompost enthaltenen Unreinigkeiten auszuscheiden.

(57) Ein Verfahren zum Trennen von Materialen unterschiedlichen spezifischen Gewichts, besonders geeignet um die im aus festem Stadtmüll gewonnenen Kompost enthaltenen Unreinigkeiten auszuscheiden, wobei der genannte Rohkompost einer Trennung von den Unreinigkeiten durch Bewegungsenergiedifferenz, über die der Kompost und die diesem assoziierten Unreinigkeiten verfügen, einer Luftsichtung und einer anschliessenden Trennung durch Bewegungsenergiedifferenz des noch gemischten Restmaterials unterzogen wird. Die Vorrichtung ist aus geneigten Ebenen, Gebläsen und Wänden gebildet, auf welche die Materialien für die vorgenannte Trennung aufprallen.

EP 0 070 264 A2

TECNICOMPLEX S.p.A. , Rom (Italien) .                                   —

_____

"Verfahren zum Trennen von Materialien unterschiedlichen spezifischen Gewichts und Vorrichtung für die Verwirklichung dieses Verfahrens , besonders geeignet um die
im aus festem Stadtmüll gewonnenen Kompost enthaltenen
Unreinigkeiten auszuscheiden ."

_____

Beschreibung :
_____

Es ist bekannt , dass der feste Stadtmüll ausser verschiedenen anderen Bestandteilen wie Papier , Plastik ,
usw. , einen hohen Gehalt in Prozenten eines organischen
Stoffes enthält , welcher in angemessener Weise vom Rest
der Masse getrennt durch einen biologischen Prozess behandelt und in ein Erzeugnis umgeformt werden kann , welches für die Aktivierung der Ackerböden geeignet ist und
die Bezeichnung "Kompost" trägt .

Diese Verfahren sind nunmehr auf der ganzen Welt bekannt und der Kompost wird mit verschiedenartigen Techniken erhalten , welche alle darauf abzielen dasselbe Erzeugnis zu erreichen .

Es ist überdies bekannt , dass der Kompost in der
Vergangenheit und wie immer noch bemerkenswerte Absatzschwierigkeiten zeitigt, da letztererreich an Unreinigkeiten ist , welche dem Landwirt das Material , welches
an und für sich biologische stichhaltig wäre , unerwünscht gestalten .

Man verspürt somit die Notwendigkeit ein Erzeugnis zu erhalten , welches frei von hauptsächlich aus Glas , Plastik , usw. gebildeten Unreinigkeiten ist , derart um aus dem Kompost ein Erzeugnis zu machen , welches zu keiner Belastung , d.h. Verschmutzung des Boden führt .

Andererseits wurde eine Reinigung des Kompostes im Anschluss an seine Herstellung bisher nicht vorgenommen , und dies angesichts der in Betracht gezogenen einzig und allein durch Granulometrie vollzogenen Trennungsmöglichkeit des organischen Teiles von den Inertstoffen .

Die vorliegende Erfindung betrifft ein Verfahren , welches es gestattet die Unreinigkeiten des Grundmaterials in einfacher und wirtschaftlicher Weise auszusondern , derart um einen praktisch unreinigungsfreien Kompost zu gewinnen .

Die vorliegende Erfindung betrifft weiters eine Vorrichtung , welche mittels Verwirklichung des vorgenannten Verfahrens es gestattet die schweren Unreinigkeiten aus dem Kompost auszuscheiden .

Gemäss der vorliegenden Erfindung besteht das Verfahren in der Unterwerfung des bisher wie auch immer hergestellten Kompostes einer ersten Stossphase , indem unter Ausnutzung des physikalischen Prinzips , wonach die Unreinigkeiten kerbschlagzähiger sind als das Grundmaterial , das leicht und anelastisch ist , die Masse auf eine zweckdienlich angeordnete Wand und bei vorbestimmter Geschwindigkeit zum Aufprall gebracht wird , wobei im Anschluss an diesen Aufprall eine erste Trennung des Grundmaterials von den Unreinigkeiten erhalten wird . Immer gemäss dem Verfahren werden danach die beiden Säulen von Erzeugnissen - Grundmaterial und Unreinigkeiten - der Einwirkung eines Luftstrahles unterzogen , welcher die Wurfbahnen durch den Effekt des spezifischen Gewichtes ändert , infolgedessen das Grundmaterial weiterhin von den Unreinigkeiten differenziert wird . Da ferner ein Überlagerungsstreifen vorhanden ist , bei dem Grundmaterial und Unreinigkeiten koexistieren , wird die letzte Phase neuerdings einer Trennung durch Aufprall unterzogen , welche der anfänglich unterzogenen Trennung ähnlich ist , derart um die Trennung durch Rückprall des Grundmaterials von den schwereren Unreinigkeiten zu vervollkommnen .

Mittels der Annahme dieser beiden verschiedenartigen Prinzipien in drei Phasen , u.zw. das Prinzip des

Rückprallunterschiedes je nach Steifigkeit oder Kerbschlagzähigkeit des Materials und der Siebung mittels einer Luftsichtung , erhält man ein Erzeugnis "Kompost" , das frei von allen inerten schweren Materialien ist , welche dieses gegenwärtig verunreinigen .

Wie vorstehend erwähnt , betrifft die Erfindung auch eine Vorrichtung , welches es gestattet das erfindungsgemässe Verfahren zu verwirklichen .

Die Vorrichtung ist in der anliegenden Zeichnung schematisch dargestellt , auf die in der nachstehenden Beschreibung Bezug genommen wird .

Ein Förderband 1 ladet das zu behandelnde Material 2 (z.B. den Rohkompost) auf eine schiefe Ebene 3 ab . Diese Ebene hat gegenüber der Waagrechten eine Neigung , welche einstellbar ist , und es zeigte sich , dass eine zweckmässige Neigung ungefähr 50° beträgt . Das auf der Ebene 3 aufschlagende Material wird durch die kombinierte Wirkung des Abfalles auf die Ebene 3 und der Neigung der Ebene selbst mit vorbestimmter Stosskraft auf eine senkrechte Wand 4 auftreffen . Beim Auftreffen prallen die schwereren und somit kerbschlagzähigeren Unreinigkeiten weiter zurück und trennen sich beim Abfallen vom eigentlichen Kompost , welcher viel leichter und anelastisch ist . Die Wand 4 ist eine der Wände , welche den Abfallleitkanal des Materials 2 bilden .

Es entsteht somit ein Materialfluss in senkrechter Bewegung von oben nach unten , teilweise unterteilt in zwei Säulen verschiedener Zusammensetzung , jedoch noch nicht vollkommen getrennt . Die senkrechte Wand 4 unterbricht sich an einem gewissen Punkt ihrer Länge und dehnt sich in eine Kammer grösserer Abmessungen oder in eine Ausdehnungskammer 5 aus , welche oben von einer waagrechten Wand 6 und unten von einem nach oben geneigten
Förderband 7 und natürlich von den Wandungen begrenzt
ist , welche den senkrechten Abfallleitkanal bilden .
In Übereinstimmung mit der Unterbrechung der senkrechten Wand 4 ist an der gegenüberliegenden Wand 8 des Abfallleitkanals des Materials ein Gebläse 11 aufgestellt ,
welches Luft durch einen Schlitz 9 zuführt , der in der
Wand 8 auf der gesamten Breite derselben ausgeführt und
z.B. mittels eines Schiebers 10 in der Höhe regulierbar
ist . Die von Gebläse 11 zugeführte Luft stösst am abfallenden Materialfluss auf und fördert durch die Wirkung
der unterschiedlichen Ablenkung der Wurfbahnen die Trennung des Kompostes von den Fremdkörpern oder Unreinigkeiten . Infolge dieser Luftsichtung und nach Rückprall
fallen die Unreinigkeiten auf das geneigte Förderband 7 ,
dessen Neigung besonders vorteilhaft ungefähr zwischen
28 und 30° gefunden wurde , und werden bei 13 aufgesammelt , von wo sie anschliessend abgeführt werden , während der nunmehr gereinigte Kompost ebenfalls auf das
Förderband 7 fällt und zur Verwertung gebracht wird .
Zweckdienliche Luftspale 12 gestatten den Austritt der
Luft aus der Kammer 5 .

Nach der vorgenannten Luftsichtung besteht jedoch
noch ein Materialstreifen , welcher nicht gut getrennt ist . Um die zweite Stosstrennung zu unterstützen , ist am Förderband 7 eine Rolle 14 vorgesehen , welche das Band leicht anhebt und dabei an seiner Ebene einen Buckel mit kleinem Krümmungsradius bildet , welcher genau unterhalb der Senkrechten der Wand 4 vorgesehen und allenfalls regulierbar ist . Auf diesen Rücken oder Buckel fällt vorwiegend der Überlagerungsstreifen von noch gemischtem Material , wobei somit die günstigste Bedingung geschaffen ist , um die restlichen Unreinigkeiten , wie vorstehend erwähnt , gemeinsam mit anderen Fremdkörpern zum Auslass 13 zu schleudern . Der von den Unreinigkeiten so gereinigte Kompost wird dann über das Förderband 7 der weiteren Verwertung zugeführt .

Die durch die Luftspalt 12 austretende Luft kann als solche ausgelassen oder dem Gebläse 11 unmittelbar rückgeführt oder auch einer Filtrieranlage zugeführt werden .

Die begriffliche Einfachheit des Verfahrens zur Beseitigung der im aus festem Stadtmüll gewonnenen Kompost enthaltenen schweren Unreinigkeiten sowie die Wirtschaftlichkeit der Anlage ist naheliegend , u.zw. sei es vom Gesichtspunkt der Verwirklichung der Anlage , sei es vom Gesichtspunkt des Betriebes . Die Tatsache einen Kompost zu finder , welcher frei von Unreinigkeiten ist , gestattet es den Kompost zu verwerten und demselben eine günstigere Aufnahme zu bereiten , als diese bisher am Markt zu verzeichnen war .

Das erfindungsgemässe Verfahren und die Vorrichtung zur Verwirklichung desselben wurden vorstehend nur beispielsweise in nicht einzuschränkender Form beschrieben und erläutert . So könnten naheliegenderweise noch alle jene Abänderungen baulicher Natur vorgenommen werden , welche sich bei der Herstellung und der praktischen Anwendung als nützlich erweisen sollten ohne damit vom ursprünglichen Erfindungsgedanken abzuweichen , welcher den nachstehenden Patentansprüchen nochmals zu entnehmen ist .

TECHICOMPLEX S.p.A. , Rom (Italien) .

"Verfahren zum Trennen von Materialien unterschiedlichen spezifischen Gewichts und Vorrichtung für die Verwirklichung dieses Verfahrens , besonders geeignet um die
im aus festem Stadtmüll gewonnenen Kompost enthaltenen
Unreinigkeiten auszuscheiden ."

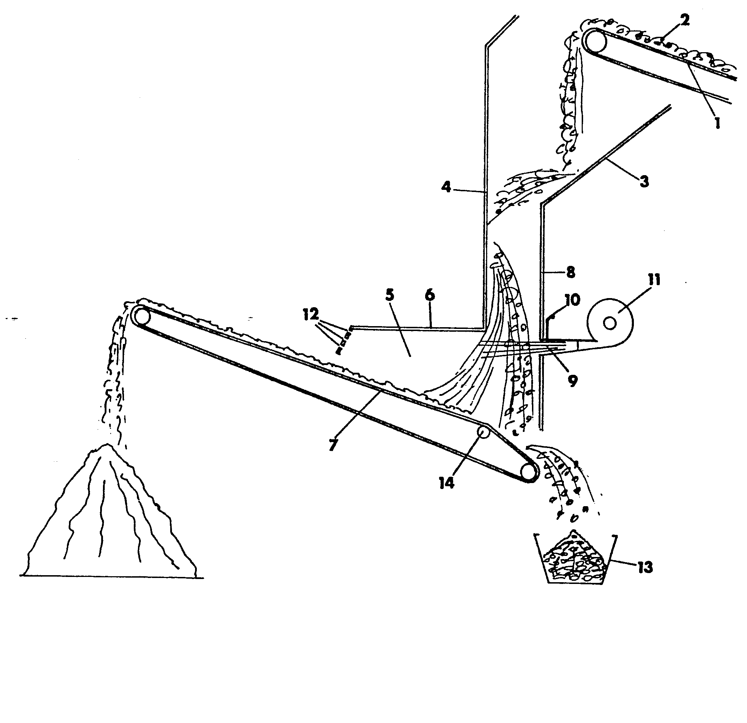

Patentansprüche :

1.) Verfahren zum Trennen von Materialien unterschiedlichen spezifischen Gewichts , besonders geeignet um die
in aus festem Stadtmüll gewonnenen Kompost enthaltenen Unreinigkeiten auszuscheiden ,
dadurch gekennzeichnet , dass der Rohkompost gegen eine
Wand zum Aufprall gebracht wird , derart um eine Trennung
des eigentlichen Kompostes von den darin enthaltenen Unreinigkeiten grössere Kerbschlagzähigkeit kraft deren
grösseren spezifischen Gewichtes zu verursachen , wobei
die absteigende Materialsäule anschliessend einer Luftsichtung unterzogen wird , welche den Kompost von den
schwereren Unreinigkeiten weiter trennt , und auf eine
zweite geneigte Wand auftrifft und durch Ausnützung derselben Rückprallerscheinung die beiden Kompost- und Unreinigungsbestandteile endgültig getrennt werden .

2.) Anlage für die Verwirklichung des Verfahrens ,
nach Anspruch 1 , dadurch gekennzeichnet , dass eine geneigte Wand (3) vorgesehen ist , auf die das vom Förderband (1) zugeführte , zu trennende Materiale (2) auftrifft , wobei der geneigten Wand (3) eine senkrechte Wand (4) gegenübersteht , gegen die das Material selbst aufprallt , welches sich dabei in zwei Phasen aufteilt , wobei die eine Phase vom eigentlichen Kompost und die andere Phase von den Unreinigkeiten mit der grösseren Kerbschlagzähigkeit ge bildet ist .

3.)Vorrichtung , nach Anspruch 2 , dadurch gekennzeichnet , dass sich die senkrechte Wand (4) , gegen die das Material aufprallt , in eine Ausdehnungskammer (5) erweitert , indem in der Höhe dieser Ausdehnungskammer ein Gebläse (11) vorgesehen ist , welches mit seinem Luftstrahl die Materialien unterschiedlichen spezifischen Gewichtes trennt , wobei Mittel , z.B. ein Schieber (10) , vorgesehen sind , um die Breite eines Schlitzes (9) für den Luftdurchtritt zu begrenzen .

4.)Vorrichtung , nach Anspruch 2 und 3 , dadurch gekennzeichnet , dass die Ausdehnungskammer (5) unten vom einem Förderband (7) begrenzt ist , wobei das Förderband (7) gegenüber der Waagrechten geneigt ist und mit Mittel (14) versehen ist , um einen Buckel oder Rücken mit begrenztem Radius zu bilden , auf dem das Material auftrifft , welches am Luftsichter noch vermischt vorbeigeströmt ist .

5.) Verfahren zum Trennen von Materialien unterschiedlichen spezifischen Gewichts und Vorrichtung für die Verwirklichung dieses Verfahrens , besonders geeignet um die
im aus festem Stadtmüll gewonnenen Kompost enthaltenen
Unreinigkeiten auszuscheiden , nach einem oder mehreren
der vorstehenden Ansprüche , im wesentlichen wie beschrieben und erläutert .